# FASCICULE DE BREVET EUROPEEN

(11) **EP 1 041 276 B1**
(45) Date de publication et mention de la délivrance du brevet: **03.03.2004**
(21) Numéro de dépôt: 00106156.3
(22) Date de dépôt: 21.03.2000
(51) Int. Cl.: F02N 11/08, H02P 1/04, H02P 1/20

(54) **Démarreur de véhicule automobile à usure réduite**
Anlasser für Kraftfahrzeuge mit geringerem Verschleiss
Vehicle starter with reduced wear

(30) Priorité: 31.03.1999 FR 9904056
(43) Date de publication de la demande: 04.10.2000
(73) Titulaire: VALEO EQUIPEMENTS ELECTRIQUES MOTEUR, 94017 Creteil Cedex (FR)
(72) Inventeur: Vilou, Gérard, 69160 Tassin La Demi Lune (FR)
(74) Mandataire: Gamonal, Didier

(56) Documents cités:
- DE-A- 3 514 223
- DE-A- 19 632 235
- FR-A- 2 749 451

## Description

La présente invention est relative aux dispositifs de commande de démarreur de véhicule automobile.

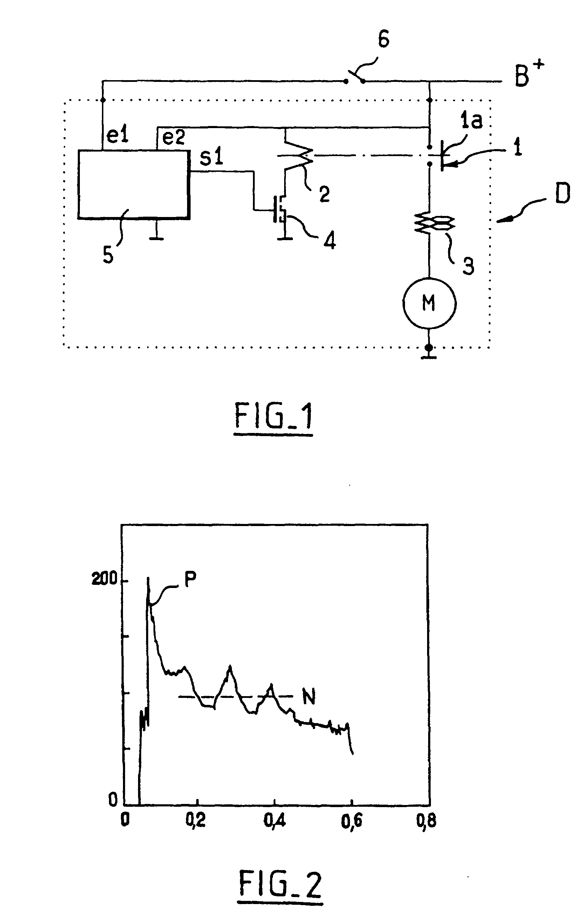

Tel qu'illustré sur la figure 1, un démarreur de l'état de la technique comporte un moteur électrique M placé en série avec un relais électromagnétique 1 entre la borne positive d'une batterie et la masse.

Le relais 1 est actionné par une bobine 2 montée en série avec un transistor 4 entre la borne positive de la batterie et la masse, le transistor 4 étant commandé par un organe de commande 5.

La bobine 2 a également pour fonction d'entraîner le pignon porté par l'arbre de sortie du moteur M, et destiné à coopérer avec l'engrenage de la couronne de démarrage du moteur thermique.

Pour plus de précisions on se reportera au document FR-A-2 749 451 conforme au préambule de la revendication 1 et notamment à la figure 1 de celui-ci montrant le pignon solidaire d'un lanceur commandé par une fourchette actionnée par le noyau plongeur du lanceur relais.

Lorsqu'un interrupteur de clé de contact 6 disposé entre la borne positive de la batterie et une entrée e1 de l'organe de commande 5 est actionné par un utilisateur, l'organe 5 rend passant le transistor 4 relié à sa sortie s1, de sorte que la bobine 2 est alimentée, que le contact 1 se ferme, et que le courant commence à passer dans le moteur électrique M.

Ce moteur électrique M est un moteur électrique de forte puissance comportant un induit et un inducteur.

On a représenté sur la figure 2 l'évolution du courant traversant le moteur au démarrage de celui-ci. Au départ, le moteur M ne tourne pas et le courant dans le moteur croît rapidement car il est seulement limité par l'inductance et la résistance du moteur. En fonction de l'inertie du rotor du moteur M et des caractéristiques couple/vitesse du moteur, ce dernier prend progressivement de la vitesse. Une force contre-électromotrice s'oppose alors à la force motrice de la batterie, ce qui réduit le courant absorbé par le moteur M, qui retombe alors à un niveau moyen N qui dépend de la charge mécanique associée au moteur M.

On voit ainsi sur la figure 2 une pointe de courant initiale dans le moteur, suivie d'une phase d'entraînement stabilisé du moteur thermique, pendant laquelle le courant oscille légèrement autour d'une valeur moyenne N. En pratique, il est fréquent d'obtenir une pointe de courant supérieure à deux ou trois fois la valeur moyenne d'entraînement N.

Ces pointes de courant induisent des surtensions et des surintensités qui, par étincelage et arcs électriques, provoquent une usure importante des balais et du collecteur du moteur électrique, qui s'ajoute à l'usure produite lors de l'entraînement effectif du moteur thermique.

On a également proposé dans le document FR-A-2 749 451 d'injecter dans la bobine 2 un signal carré du type à modulation de largeur d'impulsion (Pulse Width Modulation en anglais) de manière à piloter le relais selon une séquence choisie d'ouvertures/fermetures.

Avec un tel dispositif, les temps de conduction et de blocage ne peuvent être choisis que supérieurs au temps de réponse mécanique du contacteur, c'est à dire selon des fréquences inférieures à 100 Hz dépendant des caractéristiques de masse, d'inductance, de résistance et des forces d'attraction du contacteur.

La période de la tension hachée appliquée dans la bobine de contacteur est donc relativement large, de sorte qu'à chaque créneau de tension dans la bobine, c'est à dire à chaque séquence fermeture / ouverture du contacteur, le courant dans le moteur a le temps de décrire un pic d'intensité et de revenir à zéro.

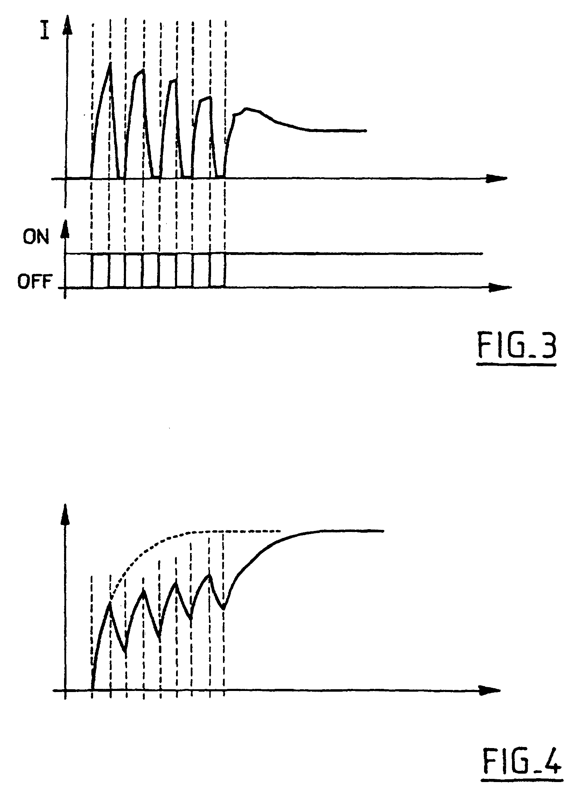

On a représenté sur les figures 3 et 4 respectivement l'évolution par impulsions de l'intensité à travers lui et l'évolution saccadée de la vitesse de rotation du moteur.

Ces grandes variations d'intensité génèrent un étincelage intense dans le moteur et sollicitent particulièrement les balais et le collecteur de celui-ci.

Ainsi, si avec un tel dispositif, on alimente le moteur selon une intensité moyenne réduite au démarrage, les fortes variations d'intensité dans ce dernier n'en sont pas moins réduites.

L'invention vise à proposer un démarreur qui permette de mettre le moteur en rotation sans générer de pointe de courant importante dans celui-ci.

Elle propose à cet effet un dispositif de commande du moteur électrique d'un démarreur de véhicule automobile, comportant des moyens pour réduire le courant à travers le moteur en début de démarrage, caractérisé en ce que ces moyens sont prévus pour mesurer une valeur représentative de l'intensité dans le moteur, la comparer à un seuil donné et commander une réduction de l'intensité dans le moteur lors d'un dépassement de ce seuil.

Grâce à l'invention les balais et le collecteur du moteur électrique du démarreur sont ménagés car on écrête le courant d'induit du moteur.

D'autres caractéristiques, buts et avantages de l'invention ressortiront encore de la description qui suit. Cette description est purement illustrative et non limitative. Elle doit être lue en regard des dessins annexés sur lesquels :
- la figure 1, déjà analysée, est un schéma fonctionnel d'un démarreur de véhicule automobile de l'art antérieur;
- la figure 2, déjà analysée, est un tracé représentant l'évolution du courant dans le moteur électrique de ce même démarreur au cours du démarrage de celui-ci;
- la figure 3, déjà analysée, est un tracé représentatif de l'évolution du courant dans un moteur électrique d'un démarreur conforme à l'état de la technique dans lequel la bobine de contacteur est alimentée par une tension en créneau ;
- la figure 4, déjà analysée, est un tracé représentatif de l'évolution de la vitesse du moteur électrique de ce même démarreur ;
- la figure 5 est un schéma fonctionnel représentant un démarreur selon l'invention ;
- la figure 6 est un tracé représentant l'évolution de l'intensité dans le moteur électrique d'un tel démarreur selon l'invention ;
- la figure 7 est un organigramme qui illustre différentes étapes mises en oeuvre par un démarreur conforme à celui de la figure 5 ;

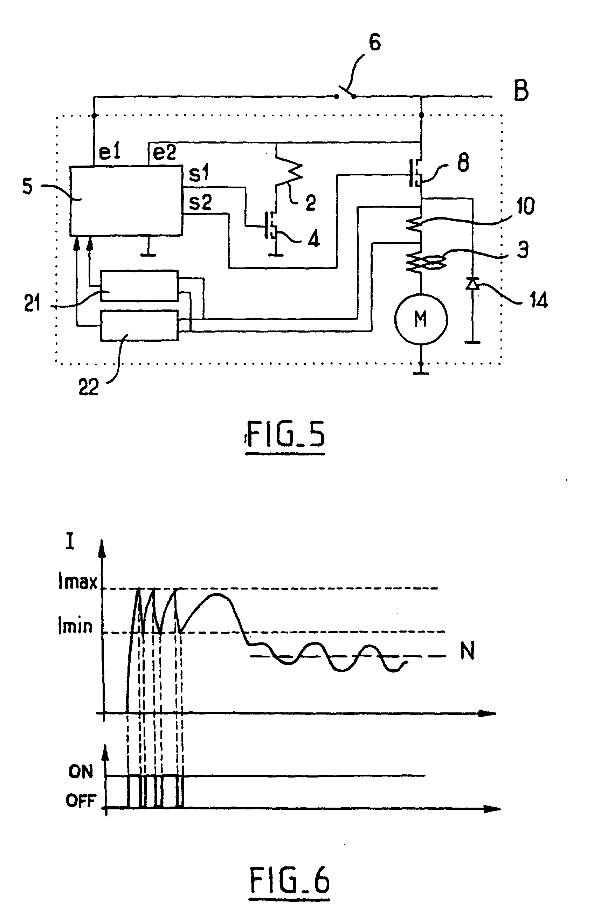

Tel que représenté à la figure 5, le démarreur selon l'invention, comporte une unité de commande 5 recevant sur une de ses entrées e1 la branche de commande portant l'interrupteur de contact 6, et une seconde entrée e2 par laquelle il est relié à une borne de la bobine 2 qui est ici réduite à sa fonction d'entraînement du pignon du moteur électrique M en sorte que le contacteur du démarreur est simplifié.

Cette seconde entrée e2 est l'entrée d'alimentation de l'unité 5.

Il comporte une branche reliant la borne positive de la batterie à la masse, qui porte en série le moteur M et un commutateur 8 commandé par l'unité 5. Le commutateur 8 est ici un transistor dont la grille est reliée à une sortie s2 de l'unité 5.

Le transistor 8 est par exemple un transistor du type MOSFET.

Ce démarreur selon l'invention présente en outre, entre le moteur et le commutateur 8, une résistance 10 dont les bornes sont reliées à deux entrées de l'unité 5. Entre la résistance 10 et l'unité 5 sont placés deux comparateurs 21 et 22.

Chaque comparateur présente deux entrées reliées respectivement aux bornes de la résistance 10, et une sortie reliée à une entrée de l'unité 5.

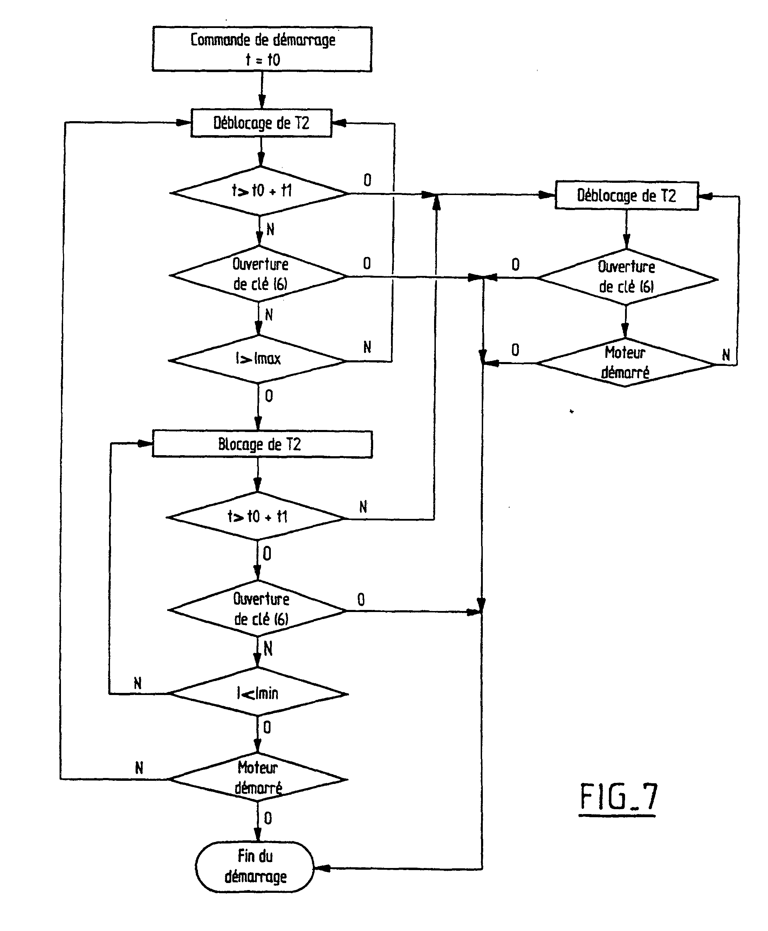

Le démarreur de la figure 5 fonctionne de la manière suivante, illustrée par l'organigramme de la figure 7.

Le présent circuit 5 étant un microprocesseur muni de moyens pour identifier l'apparition d'un niveau de tension prédéterminé sur le câble qui le relie à la batterie par l'intermédiaire de l'interrupteur de contact 6, il détecte, lorsqu'un utilisateur actionne la clé de contact 6, l'apparition d'un niveau de tension élevé sur son entrée correspondante. Il interprète l'apparition de ce niveau de tension comme un ordre de démarrage.

L'unité de commande 5 applique alors sur la grille du transistor 8 une tension continue apte à le faire passer et à le maintenir à l'état passant, de sorte que la branche portant en série la résistance 10 et le moteur M se voit soumise à la tension de batterie.

Le moteur, ainsi alimenté sous pleine tension, absorbe, au début de la mise en rotation, un courant qui croît selon une pente élevée.

Au cours de cette élévation de tension ayant commencé à t0, le comparateur 21 réalise en boucle une série de vérifications : il compare le temps (t-t0) écoulé depuis l'ordre de démarrage à une durée t1, vérifie que l'utilisateur n'a pas stoppé son action sur la clé de contact, et compare la tension aux bornes de la résistance 10, c'est à dire l'intensité dans la branche du moteur, à un seuil Imax, choisi en fonction des caractéristiques structurelles du moteur et notamment de l'intensité à partir de laquelle des arcs destructeurs apparaissent entre ses balais et son collecteur. Une telle valeur est inférieure à la valeur de l'intensité de pic qui serait atteinte par le même moteur dans un dispositif traditionnel tel que celui de la figure 1.

Pendant cette première phase :
- lorsque le temps (t-t0) et supérieur à la durée t1, l'unité 5 déclenche une séquence en boucle de pleine alimentation du moteur sans surveillance de dépassement de limite d'intensité. Pendant cette séquence, l'unité ne commande un arrêt d'alimentation que quand la clé est ouverte ou le moteur thermique est démarré.
- lorsque l'unité 5 détecte une ouverture de clé de contact, il commande l'arrêt de l'alimentation du moteur.

Lorsque l'intensité dans le moteur atteint la valeur Imax, le comparateur 21 transmet à l'unité 5 un signal lui indiquant le franchissement à la hausse de cette valeur et l'unité 5 met en oeuvre une deuxième phase de surveillance.

L'unité 5 alimente alors la grille du transistor 8 selon une tension continue qui fait passer et maintient le transistor 8 à l'état bloqué.

Le courant I dans le moteur décroît alors selon la loi classique d'un circuit R-L, ici formé par le moteur M. Ce courant est véhiculé au moteur à travers une diode de roue libre 14 montée entre la masse et un point situé entre le transistor 8 et le moteur M, passante de la masse vers le moteur.

La borne négative de la diode 14 est plus précisément reliée ici entre le transistor 8 et la résistance 10.

Le courant dans le moteur M décrit donc au cours de cette séquence ouverture/fermeture du transistor 8 un léger pic dont le sommet a la valeur Imax.

Au cours de cette seconde phase correspondant à la décroissance de l'intensité dans le moteur :
- lorsque le temps (t-t0) est supérieur à la durée t1, l'unité 5 déclenche la séquence en boucle de pleine alimentation du moteur sans surveillance de dépassement de limite d'intensité (avec seulement surveillance du démarrage du moteur thermique et d'ouverture de clé) ;
- lorsque l'unité 5 détecte une ouverture de la clé 6, il commande l'arrêt de l'alimentation du moteur M ;
- lorsque l'unité 5 détecte le démarrage du moteur thermique, il commande la coupure de l'alimentation du moteur M.
- le comparateur 22 compare l'intensité dans la branche moteur à un seuil Imin. Lorsque l'intensité dans le moteur passe en-dessous de Imin, le comparateur transmet à l'unité 5 un signal représentatif de ce franchissement à la baisse.

L'unité 5 transmet alors sur la grille du transistor 8 une tension apte à le faire passer et à le maintenir passant, de sorte que l'intensité dans le moteur croît à nouveau et entame à nouveau une nouvelle première phase précédemment décrite et donc un nouveau cycle d'ouverture/fermeture du transistor 8.

Les cycles ouverture/fermeture du transistor 8 sont répétés plusieurs fois, et à chaque cycle, le moteur est le siège d'un léger pic d'intensité compris entre les valeurs Imin et Imax. Le moteur subit donc à chaque cycle une légère accélération de sorte qu'il est le siège d'un incrément. Il est donc le siège d'une force contre-électromotrice qui croît à chaque cycle.

Après plusieurs cycles, le moteur atteint une vitesse suffisante pour que la force électromotrice générée ne permette plus au courant dans le moteur d'atteindre la valeur Imax, y compris sous pleine alimentation de la branche moteur. La valeur Imax est choisie pour cela supérieure à la valeur moyenne N de l'intensité dans le moteur en entraînement stabilisé de celui-ci, qui dépend de la charge mécanique associée au moteur M.

Il existe donc un cycle au cours duquel le courant dans le moteur croît et stagne entre les deux valeurs Imin et Imax puis décroît jusqu'au niveau de courant moyen N, autour duquel il oscille légèrement.

Le niveau moyen de courant N, représenté sur la figure 6, est inférieur à Imin, de sorte que pour atteindre le niveau N, le courant franchit Imin à la baisse après le dernier cycle.

Un tel franchissement à la baisse de Imin, qui déclenche dans les cycles précédents l'apparition d'un nouveau pic d'intensité, est ici sans effet sur l'alimentation du moteur, du fait que celui-ci est déjà sous pleine tension avant le franchissement à la baisse.

Tel qu'illustré sur l'organigramme de la figure 7, on prévoit que l'unité 5 vérifie si une durée te n'a pas été dépassée. Lorsqu'un tel dépassement intervient, les comparateurs d'intensité abandonnent leur fonction de surveillance et laissent l'intensité franchir leur seuil sans alerter l'unité 5. Grâce à cette disposition, l'unité 5 peut être programmée pour ne mettre en oeuvre un tel écrêtage de pointe d'intensité que pendant une période choisie.

Cette fonction est particulièrement avantageuse dans le cas où le courant nécessaire à l'entraînement du moteur thermique serait exceptionnellement élevé et dépasserait Imax (démarrage par très grand froid, anomalie sur le moteur thermique présentant un couple anormalement élevé, ou encore anomalie du démarreur présentant une consommation anormalement élevée).

Le conducteur reste toutefois maître à tout moment de l'arrêt du démarreur par l'ouverture de la clé de contact.

Les limites Imin et/ou Imax sont, selon une variante, indexées soit sur la température, soit sur une moyenne des niveaux d'intensité N mesurés au cours d'un certain nombre X de démarrages antérieurs, X pouvant être choisi entre 1 et 10 par exemple.

Selon une variante, les comparateurs 21 et 22 reçoivent en entrée, et comparent à un seuil, la tension de sortie de la batterie ou la tension aux bornes du démarreur, ou encore la tension entre balais positifs et balais négatifs du moteur M, ces valeurs étant représentatives de l'intensité dans le moteur.

C'est la comparaison d'une telle valeur mesurée à un seuil choisi qui déclenche dans ce cas l'ouverture ou la fermeture du contacteur 8.

Selon une variante encore, on prévoit de remplacer la résistance shunt de mesure 10 par un capteur d'intensité, par exemple un capteur d'intensité intégré au transistor 8.

Dans les exemples de réalisation décrits, le transistor 12 peut également être alimenté par une rampe de tension de grille apte à le faire passer de l'état bloqué à l'état passant de manière progressive. Une telle rampe de tension peut fournir une tension continue variable ou une tension hachée à rapport cyclique variable.

Le commutateur 12 est ici un composant électronique de puissance, mais il peut être un relais ou contacteur à double bobinage.

Le circuit formé par le transistor 8 et les moyens de commande 5, 21 et 22 associés à lui, peut constituer un ensemble monté à l'extérieur du démarreur séparément de celui-ci.

Les différents dispositifs présentés ici permettent d'utiliser des batteries de très forte puissance sans endommager le démarreur, grâce à la mise en tension progressive du moteur M.

Les moyens mis en oeuvre ici permettent plus généralement une réduction de l'usure des balais et collecteurs par arcs électriques ainsi qu'une réduction des contraintes mécaniques des différents sous-ensembles compris entre le moteur M et son pignon de sortie lors de la mise en rotation du démarreur.

Ces moyens écrêtent le courant pendant au moins le début de la mise en rotation de l'induit c'est-à-dire en début du démarrage.

On obtient donc un écrêtage de la pointe de courant de démarrage du moteur.

Lorsque le courant I devient inférieur à Imin on débloque de nouveau le transistor 8 en sorte que l'induit se met progressivement à tourner en fonction de ses caractéristiques de couple et d'inertie. Le relais 1 de la figure 1 est simplifié puisque le contacteur comportant la bobine 2 n'est plus doté de contacts mobiles.

Un tel dispositif est particulièrement utile dans le cas d'une utilisation en « stop and go », c'est à dire dans le cas d'un véhicule comportant des moyens d'arrêt automatique de son moteur thermique à l'immobilisation du véhicule et comportant des moyens de détection et de redémarrage répondant à une manifestation du conducteur d'un souhait de rouler à nouveau.

## Revendications

1. Dispositif de commande du moteur électrique (M) d'un démarreur de véhicule automobile, comportant des moyens (5, 8, 21, 22) pour réduire le courant à travers le moteur (M) en début de démarrage, **caractérisé en ce que** ces moyens sont prévus pour mesurer une valeur représentative de l'intensité dans le moteur (M), la comparer à un seuil donné (Imax) et commander une réduction de l'intensité dans le moteur (M) lors d'un dépassement de ce seuil (Imax).

2. Dispositif selon la revendication 1, **caractérisé en ce qu'**il comprend des moyens (5, 8, 22) prévus pour comparer la valeur représentative de l'intensité dans le moteur (M) à un second seuil (Imin) et commander une augmentation de l'intensité dans le moteur (M) lorsque la valeur représentative de l'intensité dans le moteur (M) passe en-dessous de ce seuil (Imin).

3. Dispositif selon l'une des revendications 1 ou 2, **caractérisé en ce que** les moyens (5, 8, 21, 22) pour mesurer la valeur représentative de l'intensité dans le moteur et la comparer à un seuil comprennent une résistance (10) en série avec le moteur (M) et un comparateur (21, 22) relié aux bornes de cette résistance.

4. Dispositif selon l'une des revendications précédentes, **caractérisé en ce que** les moyens (5, 8, 21, 22) pour commander une réduction de l'intensité dans le moteur comprennent un commutateur (8) commandé, en série avec le moteur (M).

5. Dispositif selon l'une des revendications précédentes, **caractérisé en ce que** les moyens (5, 8, 21, 22) pour commander une réduction de l'intensité dans le moteur (M) comprennent un composant électronique de puissance (8).

6. Dispositif selon l'une des revendications précédentes, **caractérisé en ce que** les moyens de mesure de la valeur représentative de l'intensité (10, 21, 22) dans le moteur comprennent un transistor (8) en série avec le moteur (M) et un capteur d'intensité intégré dans le transistor (8).

7. Dispositif selon l'une des revendications précédentes, **caractérisé en ce que** le seuil (Imax) à partir duquel le dispositif commande une réduction de l'intensité dans le moteur (M) est choisi représentatif d'une intensité dans le moteur qui est supérieure à une valeur d'intensité moyenne (N) dans le moteur (M) en régime d'entraînement stabilisé.

8. Dispositif selon l'une des revendications précédentes, **caractérisé en ce qu'**il comprend des moyens pour commander automatiquement un arrêt du moteur thermique du véhicule lors d'une immobilisation du véhicule et des moyens de détection d'une volonté de rouler à nouveau du conducteur.

9. Dispositif selon l'une des revendications précédentes, **caractérisé en ce que** les moyens pour réduire le courant à travers le moteur (M) comportent des moyens pour désactiver la comparaison à un seuil donné (Imax, Imin) après une durée choisie.

10. Dispositif selon l'une des revendications précédentes, **caractérisé en ce qu'**il comporte des moyens pour déterminer automatiquement la valeur d'au moins un seuil en fonction de la température.

11. Dispositif selon l'une des revendications précédentes, **caractérisé en ce qu'**il comporte des moyens pour calculer automatiquement une moyenne de niveaux d'intensité (N) d'entraînement stabilisé sur plusieurs démarrages antérieurs et pour déterminer une valeur d'au moins un seuil (Imin, Imax) en fonction de cette moyenne.

## Claims

1. Device for controlling the electric motor (M) of a motor vehicle starter, comprising means (5, 8, 21, 22) for reducing the current through the motor (M) at the beginning of starting, **characterised in that** these means are provided for measuring a value representing the current in the motor (M), comparing it with a given threshold (Imax) and demanding a reduction in the current in the motor (M) when this threshold (Imax) is exceeded.

2. Device according to Claim 1, **characterised in that** it comprises means (5, 8, 22) provided for comparing the value representing the current in the motor (M) with a second threshold (Imin) and demanding an increase in the current in the motor (M) when the value representing the current in the motor (M) goes below this threshold (Imin).

3. Device according to one of Claims 1 or 2, **characterised in that** the means (5, 8, 21, 22) for measuring the value representing the current in the motor and comparing it with a threshold comprise a resistor (10) in series with the motor (M) and a comparator (21, 22) connected to the terminals of this resistor.

4. Device according to one of the preceding claims, **characterised in that** the means (5, 8, 21, 22) for demanding a reduction in the current in the motor comprise a controlled switch (8) in series with the motor (M).

5. Device according to one of the preceding claims, **characterised in that** the means (5, 8, 21, 22) for demanding a reduction in the current in the motor (M) comprise an electronic power component (8).

6. Device according to one of the preceding claims, **characterised in that** the means of measuring the value representing the current (10, 21, 22) in the motor comprise a transistor (8) in series with the motor (M) and a current sensor integrated in the transistor (8).

7. Device according to one of the preceding claims, **characterised in that** the threshold (Imax) as from which the device demands a reduction in the current in the motor (M) is chosen so as to represent the current in the motor which is greater than a mean current value (N) in the motor (M) at stabilised driving speed.

8. Device according to one of the preceding claims, **characterised in that** it comprises means for automatically demanding a stoppage of the thermal engine of the vehicle when the vehicle is stopped and means of detecting an intention of the driver to drive again.

9. Device according to one of the preceding claims, **characterised in that** the means for reducing the current through the motor (M) comprise means for deactivating the comparison at a given threshold (Imax, Imin) after a chosen period.

10. Device according to one of the preceding claims, **characterised in that** it comprises means for automatically determining the value of at least one threshold as a function of temperature.

11. Device according to one of the preceding claims, **characterised in that** it comprises means for automatically calculating an average of stabilised driving current levels (N) over several previous start-ups and to determine a value of at least one threshold (Imin, Imax) according to this average.

## Patentansprüche

1. Vorrichtung zur Steuerung des Elektromotors (M) eines Kraftfahrzeuganlassers mit Mitteln zur Reduzierung Stroms durch den Elektromotor (M) am Anfang des Anlaßvorgangs, **dadurch gekennzeichnet, daß** diese Mittel vorgesehen sind, um einen für die Stromstärke im Elektromotor (M) repräsentativen Wert zu messen, ihn mit einem gegebenen Schwellenwert (Imax) zu vergleichen und bei einer Überschreitung dieses Schwellenwerts (Imax) eine Reduzierung der Stromstärke im Elektromotor (M) zu veranlassen.

2. Vorrichtung nach Anspruch 1, **dadurch gekennzeichnet, daß** sie Mittel (5, 8, 22) umfaßt, die vorgesehen sind, um den für die Stromstärke im Elektromotor (M) repräsentativen Wert mit einem zweiten Schwellenwert (Imin) zu vergleichen und eine Erhöhung der Stromstärke im Elektromotor (M) zu veranlassen, wenn der für die Stromstärke im Elektromotor (M) repräsentative Wert diesen Schwellenwert (Imin) unterschreitet.

3. Vorrichtung nach einem der Ansprüche 1 oder 2, **dadurch gekennzeichnet, daß** die Mittel (5, 8, 21, 22), um den für die Stromstärke im Elektromotor repräsentativen Wert zu messen und ihn mit einem Schwellenwert zu vergleichen, einen mit dem Elektromotor (M) in Reihe geschalteten Widerstand (10) und einen mit den Klemmen dieses Widerstands verbundenen Vergleicher (21, 22) umfassen.

4. Vorrichtung nach einem der vorangehenden Ansprüche, **dadurch gekennzeichnet, daß** die Mittel (5, 8, 21, 22), um eine Reduzierung der Stromstärke im Elektromotor zu veranlassen, einen mit dem Elektromotor (M) in Reihe geschalteten gesteuerten Vergleicher (8) umfassen.

5. Vorrichtung nach einem der vorangehenden Ansprüche, **dadurch gekennzeichnet, daß** die Mittel (5, 8, 21, 22), um eine Reduzierung der Stromstärke im Elektromotor (M) zu veranlassen, ein elektronisches Leistungsbauteil (8) umfassen.

6. Vorrichtung nach einem der vorangehenden Ansprüche, **dadurch gekennzeichnet, daß** die Mittel zum Messen des für die Stromstärke im Elektromotor repräsentativen Werts (10, 21, 22) einen mit dem Elektromotor (M) in Reihe geschalteten Transistor (8) und einen in den Transistor (8) integrierten Stromstärkegeber umfassen.

7. Vorrichtung nach einem der vorangehenden Ansprüche, **dadurch gekennzeichnet, daß** der Schwellenwert (Imax), ab dem die Vorrichtung eine Reduzierung der Stromstärke im Elektromotor (M) veranlaßt, repräsentativ für eine Stromstärke im Elektromotor ausgewählt wird, die größer als ein mittlerer Stromstärkewert (N) im Elektromotor (M) bei Betrieb mit stabilisiertem Antrieb ist.

8. Vorrichtung nach einem der vorangehenden Ansprüche, **dadurch gekennzeichnet, daß** sie Mittel, um automatisch eine Abschaltung des Verbrennungsmotors des Fahrzeugs bei einem Anhalten des Fahrzeugs zu veranlassen, und Mittel zur Erfassung einer seitens des Fahrers bestehenden Absicht weiterzufahren umfaßt.

9. Vorrichtung nach einem der vorangehenden Ansprüche, **dadurch gekennzeichnet, daß** die Mittel zur Reduzierung des Stroms durch den Elektromotor (M) Mittel umfassen, um den Vergleich mit einem gegebenen Schwelle nwert (Imax, Imin) nach einer ausgewählten Dauer zu deaktivieren.

10. Vorrichtung nach einem der vorangehenden Ansprüche, **dadurch gekennzeichnet, daß** sie Mittel umfaßt, um automatisch den Wert wenigstens eines Schwellenwerts in Abhängigkeit von der Temperatur zu bestimmen.

11. Vorrichtung nach einem der vorangehenden Ansprüche, **dadurch gekennzeichnet, daß** sie Mittel umfaßt, um automatisch einen Mittelwert von Stromstärkepegeln (N) bei stabilisiertem Antrieb bezogen auf mehrere vorherige Anlaßvorgänge zu berechnen und um einen Wert wenigstens eines Schwellenwerts (Imin, Imax) in Abhängigkeit von diesem Mittelwert zu bestimmen.
